# EUROPEAN PATENT APPLICATION

(11) **EP 4 586 127 A1**
(43) Date of publication of application: **16.07.2025**
(21) Application number: 23869771.8
(22) Date of filing: 26.06.2023
(51) Int. Cl.: G06F 21/79

(54) **CHECK METHOD AND APPARATUS**

(30) Priority: 29.09.2022 CN 202211199077
(71) Applicant: Huawei Technologies Co., Ltd., Shenzhen, Guangdong 518129 (CN)
(72) Inventor: GUO, Fang, Shenzhen, Guangdong 518129 (CN); WANG, Zuo, Shenzhen, Guangdong 518129 (CN); ZHANG, Qinglong, Shenzhen, Guangdong 518129 (CN)
(74) Representative: Pfenning, Meinig & Partner mbB
(86) International application number: PCT/CN2023/102319
(87) International publication number: WO 2024/066523

(57) **Abstract**

Embodiments of this application disclose a check method and apparatus, and relate to the field of computer technologies, to prevent an attacker from replacing new-version data in a flash of a device with old-version data in a device power-off attack scenario. The method includes: first obtaining a first count value, a second count value, a first value, and a second value; and then determining, based on the first count value, the second count value, the first value, and the second value, whether first data and second data in an electronic device are abnormal, where the first count value is a value of a counter of a first electronic fuse, the second count value is a value of a counter of a second electronic fuse, the first value indicates a status of the first data, the first data is data stored in a first memory, the second value indicates a status of the second data, the second data is data stored in a second memory, there is a check relationship between the first count value and the first value, and there is a check relationship between the second count value and the second value.

## Description

This application claims priority to Chinese Patent Application No. 202211199077.7, filed with the China National Intellectual Property Administration on September 29, 2022 and entitled "CHECK METHOD AND APPARATUS", which is incorporated herein by reference in its entirety.

### TECHNICAL FIELD

Embodiments of this application relate to the field of computer technologies, and in particular, to a check method and apparatus.

### BACKGROUND

With development of a manufacturing process, an architecture of an external flash (flash) is involved in a system on a chip (system on a chip, SoC) design process, to construct a secure storage feature. Due to an external form of the external flash, data stored in the flash needs to be protected in terms of confidentiality and integrity. In addition, an anti-rollback design needs to be supported, to prevent an attacker from replacing new-version data with old-version data to perform an attack.

In a related technology, in a device power-on process, an attacker may be prevented from replacing new-version data in a flash of the device with old-version data. However, in some scenarios, the attacker may replace the new-version data in the flash of the device with the old-version data in a device power-off attack scenario to perform an attack.

Therefore, how to prevent the attacker from replacing the new-version data in the flash of the device with the old-version data to perform the attack in the device power-off attack scenario is one of urgent problems that need to be resolved by a person skilled in the art.

### SUMMARY

Embodiments of this application provide a check method and apparatus, to prevent an attacker from replacing new-version data in a flash of a device with old-version data in a device power-off attack scenario. To achieve the foregoing objectives, the following technical solutions are used in embodiments of this application.

According to a first aspect, an embodiment of this application provides a check method, applied to an electronic device. The electronic device includes a first electronic fuse, a second electronic fuse, a first memory, and a second memory. The method includes: first obtaining a first count value, a second count value, a first value, and a second value; and then determining, based on the first count value, the second count value, the first value, and the second value, whether the first data and the second data in the electronic device are abnormal, where the first count value is a value of a counter of the first electronic fuse, the second count value is a value of a counter of the second electronic fuse, the first value indicates a status of the first data, the first data is data stored in the first memory, the second value indicates a status of the second data, the second data is data stored in the second memory, there is a check relationship between the first count value and the first value, and there is a check relationship between the second count value and the second value.

In a related technology, whether the data stored in the two flashes of the electronic device is abnormal may be determined by using the value of the counter of the single electronic fuse of the electronic device and two status values indicating the statuses of the data stored in the two flashes of the electronic device. In a power-off attack scenario, an attacker may obtain data stored in one of the two flashes, and replace the other flash with the obtained data. Because it can be determined that data in one of the two flashes is normal provided that a status value corresponding to the one flash matches a value of a counter of an electronic fuse, an anti-rollback status verification is successfully passed. Therefore, the attacker can successfully pass the anti-rollback status verification by replacing the other flash with the obtained data.

However, in the check method provided in this embodiment of this application, whether the first data stored in the first memory and the second data stored in the second memory of the electronic device are abnormal may be determined based on the first count value, the second count value, the first value, and the second value. In this way, regardless of whether the attacker replaces the data in the first memory or the second memory, it is determined that the data is abnormal because a status value of the data does not match the value of the counter of the electronic fuse corresponding to the status value, so that an anti-rollback status cannot be passed. In this way, an attack fails. Therefore, the check method provided in this embodiment of this application can prevent the attacker from replacing new-version data in a flash of a device with old-version data in the device power-off attack scenario.

Optionally, the first memory and the second memory may be two different areas of a same memory of the electronic device.

For example, the first memory may be an active storage area of a flash (flash) of the electronic device, and the second memory may be a standby storage area of the flash of the electronic device.

In a possible implementation, whether the first data in the electronic device is abnormal may be determined based on the first count value and the first value. Then, whether the second data in the electronic device is abnormal is determined based on the second count value and the second value.

It can be learned that, according to the check method provided in this embodiment of this application, whether the first data in the electronic device is abnormal may be determined based on the first count value and the first value, and whether the second data in the electronic device is abnormal may be determined based on the second count value and the second value. In this way, regardless of whether the attacker replaces the first data in the first memory or the second data in the second memory, it is determined that the data is abnormal because a status value of the data does not match the value of the counter of the electronic fuse corresponding to the status value, so that an anti-rollback status cannot be passed. In this way, an attack fails. Therefore, the check method provided in this embodiment of this application can prevent the attacker from replacing new-version data in a flash of a device with old-version data in the device power-off attack scenario.

In a possible implementation, the first count value may be input into a check function as a parameter to obtain a first check value. Whether the first data is abnormal is determined based on the first check value and the first count value.

For example, the first count value may be input into the check function as a parameter to obtain the first check value. Then, when the first check value is the same as the first count value, it is determined that the first data is normal; or when the first check value is different from the first count value, it is determined that the first data is abnormal.

In a possible implementation, the second count value may be input into the check function as a parameter to obtain a second check value. Whether the first data is abnormal is determined based on the second check value and the second count value.

For example, the second count value may be input into the check function as a parameter to obtain the second check value. Then, when the second check value is the same as the second count value, it is determined that the second data is normal; or when the first check value is different from the first count value, it is determined that the first data is abnormal.

It can be learned that, according to the check method provided in this embodiment of this application, whether the first data in the electronic device is abnormal may be determined based on the first value and the first check value that is obtained by inputting the first count value into the check function as the parameter; and whether the second data in the electronic device is abnormal is determined based on the second value and the second check value that is obtained by inputting the second count value into the check function. In this way, regardless of whether the attacker replaces the first data in the first memory or the second data in the second memory, it is determined that the data is abnormal because a status value of the data does not match the value of the counter of the electronic fuse corresponding to the status value, so that an anti-rollback status cannot be passed. In this way, an attack fails. Therefore, the check method provided in this embodiment of this application can prevent the attacker from replacing new-version data in a flash of a device with old-version data in the device power-off attack scenario.

In a possible implementation, the method may further include: when the first data is abnormal and the second data is normal, replacing the data stored in the first memory with the data stored in the second memory.

It can be learned that, according to the check method provided in this embodiment of this application, when the first data is abnormal and the second data is normal, the abnormal data stored in the first memory may be replaced with the normal data stored in the second memory, so that it is ensured that after the data in the first memory is replaced with the abnormal data by the attacker, the abnormal data in the first memory is replaced with the normal data in time, to prevent the attacker from performing an attack by using the abnormal data in the first memory.

In a possible implementation, the method may further include: when the first data is normal and the second data is abnormal, replacing the data stored in the second memory with the data stored in the first memory.

It can be learned that, according to the check method provided in this embodiment of this application, when the first data is normal and the second data is abnormal, the abnormal data stored in the second memory may be replaced with the normal data stored in the first memory, so that it is ensured that after the data in the second memory is replaced with the abnormal data by the attacker, the abnormal data in the second memory is replaced with the normal data in time, to prevent the attacker from performing an attack by using the abnormal data in the second memory.

In a possible implementation, the method may further include: inputting the first count value into the check function as a parameter to obtain the first value.

It may be understood that, because the first value is obtained based on the first count value, and when the first data corresponding to the first value changes, the first value also changes accordingly, the first check value obtained based on the second value is different from the first value. Therefore, after the second value is obtained based on the first count value, the first count value may be input into the check function to obtain the first check value, and the first check value is compared with the first value to check whether the first value changes and whether the first data corresponding to the first value is abnormal.

In a possible implementation, the method may further include: inputting the second count value into the check function as a parameter to obtain the second value.

It may be understood that, because the second value is obtained based on the second count value, and when the second data corresponding to the second value changes, the second value also changes accordingly, the second check value obtained based on the second value is different from the second value. Therefore, after the second value is obtained based on the second count value, the second count value may be input into the check function to obtain the second check value, and the second check value is compared with the second value to check whether the first value changes and whether the second data corresponding to the second value is abnormal.

In a possible implementation, the method may further include: updating the first count value; and updating the first value based on an updated first count value.

In a possible implementation, the first count value may be updated when data update is performed on the first data.

For example, the electronic device may obtain a data version update push by using another device (for example, a server or another electronic device), to trigger data update. Then, before updating the first data, the electronic device first updates the first count value, and then updates the first data and the data stored in the first memory of the electronic device, so that the data version of the electronic device is updated.

In a possible implementation, the updated first count value may be input into the check function as a parameter to obtain an updated first value.

In a possible implementation, the method may further include: updating the second count value; and updating the second value based on an updated second count value.

It may be understood that the electronic device may first update the second count value, and then update the second data and the backup data stored in the first memory of the electronic device, so that the backup data version of the electronic device is updated.

In a possible implementation, the second count value may be updated when the first count value is different from the second count value.

In a possible implementation, the updated second count value may be input into the check function as a parameter to obtain an updated second value.

It should be noted that, that the first count value is different from the second count value indicates that the data in the first memory is updated but the data in the second memory is not updated. In this case, the second counter may be updated to trigger the data in the second memory and the second count value to be updated, so that a version of the data stored in the first memory is the same as a version of the data stored in the second memory.

According to a second aspect, an embodiment of this application provides a check apparatus, used in an electronic device. The electronic device includes a first electronic fuse, a second electronic fuse, a first memory, and a second memory, and the check apparatus includes a transceiver unit and a processing unit. The transceiver unit is configured to obtain a first count value, a second count value, a first value, and a second value. The processing unit is configured to determine, based on the first count value, the second count value, the first value, and the second value, whether first data and second data in the electronic device are abnormal. The first count value is a value of a counter of the first electronic fuse, the second count value is a value of a counter of the second electronic fuse, the first value indicates a status of the first data, the first data is data stored in the first memory, the second value indicates a status of the second data, the second data is data stored in the second memory, there is a check relationship between the first count value and the first value, and there is a check relationship between the second count value and the second value.

Specifically, the check apparatus may be the electronic device or a chip or a functional unit of the electronic device.

In a possible implementation, the processing unit is specifically configured to: determine, based on the first count value and the first value, whether the first data in the electronic device is abnormal; and determine, based on the second count value and the second value, whether the second data in the electronic device is abnormal.

In a possible implementation, the processing unit is further configured to: when the first data is abnormal and the second data is normal, replace the data stored in the first memory with the data stored in the second memory.

In a possible implementation, the processing unit is further configured to: when the first data is normal and the second data is abnormal, replace the data stored in the second memory with the data stored in the first memory.

In a possible implementation, the processing unit is further configured to: update the first count value; and update the first value based on an updated first count value.

In a possible implementation, the processing unit is further configured to: update the second count value; and update the second value based on an updated second count value.

In a possible implementation, the processing unit is specifically configured to update the second count value when the first count value is different from the second count value.

According to a third aspect, an embodiment of this application further provides a check apparatus. The check apparatus includes at least one processor. When executing program code or instructions, the at least one processor implements the method according to any one of the first aspect or the possible implementations of the first aspect.

Optionally, the check apparatus may further include at least one memory, and the at least one memory is configured to store the program code or the instructions.

According to a fourth aspect, an embodiment of this application further provides a chip, including an input interface, an output interface, and at least one processor. Optionally, the chip further includes a memory. The at least one processor is configured to execute code in the memory. When the at least one processor executes the code, the chip implements the method according to any one of the first aspect or the possible implementations of the first aspect.

Optionally, the chip may be an integrated circuit.

According to a fifth aspect, an embodiment of this application further provides a computer non-volatile readable storage medium, configured to store a computer program. The computer program is used to implement the method according to any one of the first aspect or the possible implementations of the first aspect.

According to a sixth aspect, an embodiment of this application further provides a computer program product including instructions. When the computer program product runs on a computer, the computer is enabled to implement the method according to any one of the first aspect or the possible implementations of the first aspect.

According to a seventh aspect, an embodiment of this application further provides an electronic device. The electronic device includes a first electronic fuse, a second electronic fuse, a first memory, a second memory, and the check apparatus according to the third aspect.

The check apparatus, the computer storage medium, the computer program product, and the chip provided in embodiments are all configured to perform the method provided above. Therefore, for beneficial effects that can be achieved by the check apparatus, the computer storage medium, the computer program product, and the chip, refer to the beneficial effects in the method provided above. Details are not described herein again.

### BRIEF DESCRIPTION OF DRAWINGS

To describe technical solutions in embodiments of this application more clearly, the following briefly describes accompanying drawings for describing embodiments. It is clear that the accompanying drawings in the following descriptions show merely some of embodiments of this application, and a person of ordinary skill in the art may still derive other accompanying drawings from these accompanying drawings without creative efforts.
FIG. 1 is a diagram of a structure of an electronic device according to an embodiment of this application;
FIG. 2 is a schematic flowchart of a check method according to an embodiment of this application;
FIG. 3 is a schematic flowchart of data update according to an embodiment of this application;
FIG. 4 is a diagram of a structure of a check apparatus according to an embodiment of this application;
FIG. 5 is a diagram of a structure of a chip according to an embodiment of this application; and
FIG. 6 is a diagram of a structure of another electronic device according to an embodiment of this application.

### DESCRIPTION OF EMBODIMENTS

The following clearly and completely describes technical solutions of embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of embodiments of this application.

The term "and/or" in this specification describes only an association relationship for describing associated objects and represents that three relationships may exist. For example, A and/or B may represent the following three cases: Only A exists, both A and B exist, and only B exists.

In this specification and the accompanying drawings of embodiments of this application, the terms "first", "second", and the like are intended to distinguish between different objects or distinguish between different processing of a same object, but do not indicate a particular order of the objects.

In addition, the terms "including", "having", and any other variants thereof mentioned in descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device.

It should be noted that, in descriptions of embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the expression "example", "for example", or the like is intended to present a related concept in a specific manner.

In the descriptions of embodiments of this application, unless otherwise specified, "a plurality of" means two or more.

First, terms used in embodiments of this application are explained and described.

Counter is a type of sequential circuit, which is configured to implement calculation functions such as addition and subtraction.

Electronic fuse (efuse) is a one-time programming storage module, where the efuse is unidirectional, and each bit value cannot be changed to another value after each bit in the efuse writes data. For example, if a bit in the efuse is set to 0, the bit is completely burnt and a value of the bit cannot be changed. In other words, the bit cannot be set to 1.

With development of a manufacturing process, an architecture of an external flash (flash) is involved in a system on a chip (system on a chip, SoC) design process, to construct a secure storage feature. Due to an external form of the external flash, data stored in the flash needs to be protected in terms of confidentiality and integrity. In addition, an anti-rollback design needs to be supported, to prevent an attacker from replacing new-version data with old-version data to perform an attack.

In a related technology, in a device power-on process, an attacker may be prevented from replacing new-version data in a flash of the device with old-version data. However, in some scenarios, the attacker may replace the new-version data in the flash of the device with the old-version data in a device power-off attack scenario to perform an attack.

In a related technology, an electronic device includes a single electronic fuse and a flash (or two flashes) having active and standby areas, where a counter is disposed inside the electronic fuse.

When the electronic device checks an anti-rollback status of data, checking an anti-rollback status of the data stored in the flash specifically includes the following process.

When data is written into the flash, an HMAC value is calculated first. An HMAC key is a dedicated anti-rollback key (key). In addition, there are two other inputs. One is a value of a counter of a current electronic fuse, and the other is a tag (Tag) value of the data. A status of the data is bound to the value of the counter of the electronic fuse by using the HMAC value to construct a check relationship, and the HMAC value is stored in the flash as a reference value for comparison.

To check the anti-rollback status of the data, in other words, to check whether the data is abnormal, the following steps are performed.
1. When the anti-rollback status of the data needs to be checked, an actual HMAC value is calculated through HMAC calculation based on the tag value of the data, the value of a counter value that is read from the electronic fuse, and the anti-rollback key key. Then, the actual HMAC value is compared with the reference value in the flash. If the actual HMAC value and the reference value are the same, it indicates that the anti-rollback status is normal, in other words, the data stored in the flash is normal and the stored data is not replaced or tampered with.
2. The flash has active/standby areas. When data in the active area is normal but data in the standby area is abnormal, the data in the active area is used to replace the data in the standby area. When the data in the standby area is normal but the data in the active area is abnormal, the data in the standby area is used to replace the data in the active area.

That the electronic device invokes an electronic fuse update interface to update the value of the counter of the electronic fuse includes the following process.
1. Based on the tag of the data, an updated value T+1 of the counter of the electronic fuse, and the anti-rollback key key, an HMAC value of a comparison reference in the flash of the active area is updated to H (T+1) through the HMAC calculation by using H (T+1) =HMAC (key, Tag|T+1), where HMAC () is a hash algorithm function.
2. The value of the counter of the electronic fuse (efuse) is updated to T+1.
3. An HMAC value of a comparison reference in the flash of the standby area is updated to H (T+1) by using H (T+1) HMAC (key, Tag|T+1).

As shown in Table 1, in an actual case, the electronic device has an attack path, and the attacker performs data rollback to replace the data stored in the flash, to implement the following attacks.

A value of the counter of the electronic fuse in an initial state is T, a first status value and a second status value are H (T) that matches T, and both data stored in the flash of the active area and data stored in the flash of the standby area are data A of a version 1.

At a moment 1, the electronic device updates data (data is updated from the version 1 to a version 2). The electronic device calculates H (T+1) =HMAC (key, Tag∥cnt+1) based on the tag of the data, cnt+1, and the anti-rollback key key through HMAC calculation; and updates the HMAC value used as a comparison reference in the flash of the active area (the first status value is H (T+1)), and updates the data A of the version 1 that is stored in the flash of the active area to data B of the version 2.

At a moment 2, the electronic device is powered off. The first status value, the second status value, and the value of the counter of the electronic fuse remain unchanged.

At a moment 3, the electronic device is powered on again. The attacker reads all data in the flash of the active area, and obtains the data B of the version 2 that is bound to H (T+1).

At a moment 4, the electronic device performs an anti-rollback check. Because the first status value H (T+1) does not match a count value T, the check fails, and it is determined that the data in the flash of the active area is abnormal and the data in the flash of the active area may be replaced or tampered with. However, because the second status value H (T) matches the value T of the counter, the check succeeds, and it is determined that the data in the flash of the standby area is normal. Therefore, the data B of the version 2 that is stored in the flash of the active area is replaced with the data A of the version 1 that is stored in the flash of the standby area.

At a moment 5, the electronic device updates data (the data is updated from the version 1 to a version 3). The electronic device first calculates H (T+1) =HMAC (key, Tag∥cnt+1) based on the tag of the data, cnt+1, and the anti-rollback key key through HMAC calculation; updates the HMAC value used as a comparison reference in the flash of the active area (updates the first status value to H (T+1)), and updates the data A of the version 1 that is stored in the flash of the active area to data C of the version 3; updates the value of the counter of the electronic fuse to T; and then, updates an HMAC value used as a comparison reference in the flash of the standby area (updates the second status value to H (T+1)), and updates the data A of the version 1 that is stored in the flash of the standby area to the data C of the version 3.

**Table 1**

| Attack procedure against the conventional technology | Value of the counter of the electronic fuse | First status value, data in the flash of the active area, and data version | Second status value, data in the flash of the standby area, and data version |
|---|---|---|---|
| Initial | T | H (T) (data A, version 1) | H (T) (data A, version 1) |
| Moment 1 | T | H (T+1) (data B, version 2) | H (T) (data A, version 1) |
| Moment 2 | T | H (T+1) (data B, version 2) | H (T) (data A, version 1) |
| Moment 3 | T | H (T+1) (data B, version 2) | H (T) (data A, version 1) |
| Moment 4 | T | H (T) (data A, version 1) | H (T) (data A, version 1) |
| Moment 5 | T+1 | H (T+1) (data C, version 3) | H (T+1) (data C, version 3) |
| The attacker replaces the data in the flash of the active area | T+1 | H (T+1) (data B, version 2) | H (T+1) (data C, version 3) |
| The attacker replaces the data in the flash of the standby area | T+1 | H (T+1) (data C, version 3) | H (T+1) (data B, version 2) |

If the data B of the version 2 has a vulnerability and the data C of the version 3 fixes the vulnerability, the attacker may attack the electronic device by using the vulnerability in the data B of the version 2 through the following attack path.

Attack path 1: The attacker replaces the data in the flash of the active area.

The attacker replaces the data C of the version 3 that is stored in the flash of the active area with the data B of the version 2 that is read at the moment 5 and that is bound to H (T+1). Because both the data B of the version 2 and the data C of the version 3 are bound to H (T+1), after the data C of the version 3 is replaced with the data B of the version 2, the HMAC value (that is, the first status value) used as a comparison reference in the flash of the active area does not change and is still H (T+1). The electronic device checks the first status value by using the value T+1 of the counter. Because the first status value H (T+1) matches the value T+1 of the counter, the electronic device determines, through the check, that the data in the flash of the active area is normal. The attacker may attack the electronic device by using the vulnerability in the data B of the version 2 in the flash of the active area.

Attack path 2: The attacker replaces the data in the flash of the standby area.

The attacker replaces the data C of the version 3 that is stored in the flash of the standby area with the data B of the version 2 that is read at the moment 5 and that is bound to H (T+1). Because both the data B of the version 2 and the data C of the version 3 are bound to H (T+1), after the data C of the version 3 is replaced with the data B of the version 2, the HMAC value (that is, the second status value) used as a comparison reference in the flash of the standby area does not change and is still H (T+1). The electronic device checks the second status value by using the value T+1 of the counter. Because the second status value H (T+1) matches the value T+1 of the counter, the electronic device determines, through the check, that the data in the flash of the standby area is normal. The attacker may attack the electronic device by using the vulnerability in the data B of the version 2 in the flash of the standby area.

Therefore, an embodiment of this application provides a check method, to prevent the attacker from replacing new-version data in the flash of the device with old-version data in the device power-off attack scenario. The method is applicable to an electronic device. The electronic device includes a first electronic fuse, a second electronic fuse, a first memory, and a second memory.

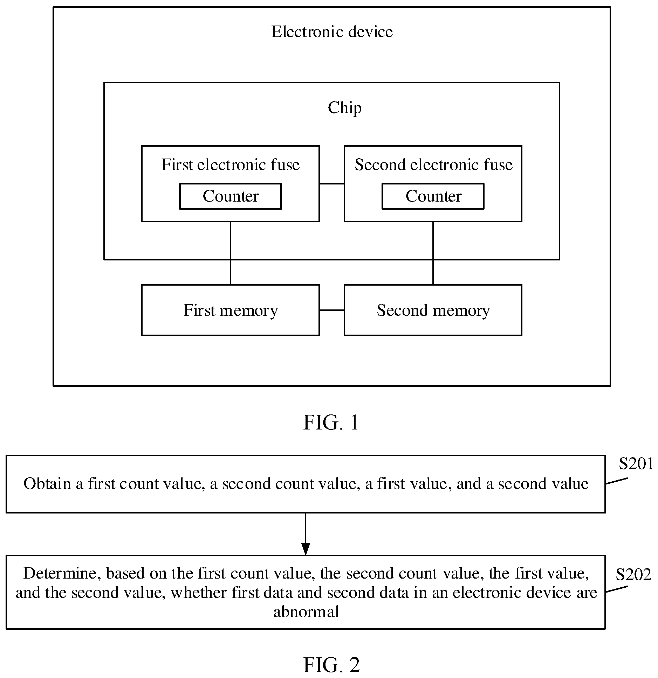

FIG. 1 shows a possible existence form of an electronic device. As shown in FIG. 1, the electronic device may include a chip, a first memory, and a second memory. A first electronic fuse and a second electronic fuse are disposed inside the chip, and counters are disposed inside the first electronic fuse and the second electronic fuse.

Optionally, the first memory and the second memory may be two different areas of a same memory of the electronic device.

For example, the first memory may be an active storage area of a flash (flash) of the electronic device, and the second memory may be a standby storage area of the flash of the electronic device.

The following describes a check method provided in an embodiment of this application with reference to the electronic device shown in FIG. 1.

FIG. 2 shows a check method according to an embodiment of this application. As shown in FIG. 2, the method includes the following steps.

S201: Obtain a first count value, a second count value, a first value, and a second value.

The first count value is a value of a counter of the first electronic fuse, the second count value is a value of a counter of the second electronic fuse, the first value indicates a status of first data, there is a check relationship between the first count value and the first value, the second value indicates a status of second data, and there is a check relationship between the second count value and the second value. The first data is data stored in the first memory, and the second data is data stored in the second memory.

Specifically, when data is written into the first memory and the second memory, the first value and the second value are calculated based on the first count value of the counter of the first electronic fuse and the second count value of the counter of the second electronic fuse, so that there is a check relationship between the first counter and the first value, and there is also a check relationship between the second count value and the second value. For example, the first/second count value may be used as an input of a check function by using the check function (for example, a hash function), and an obtained output of the check function is the first/second value. After the first value and a second data value are obtained, the first value and the second value may be respectively stored in the first memory and the second memory as reference values for comparison.

In a possible implementation, the check relationship may be a hash check relationship, a message authentication code (Message Authentication Code, MAC) check relationship, or a signature check relationship.

In a possible implementation, the first count value may be input into the check function as a parameter to obtain the first value.

For example, the first count value may be input into a hash check algorithm or a MAC check algorithm as a parameter to obtain the first value.

For example, the first count value T and a tag value of the first data may be input into a hash check algorithm HMAC (key, Tag|T+1) algorithm, to obtain the first value H (T).

It may be understood that, because the first value is obtained based on the first count value, and when the first data corresponding to the first value changes, the first value also changes accordingly, and the first check value obtained based on the second value is different from the first value. Therefore, after the second value is obtained based on the first count value, the first count value may be input into the check function to obtain the first check value, and the first check value is compared with the first value to check whether the first value changes and whether the first data corresponding to the first value is abnormal.

In a possible implementation, the second count value may be input into the check function as a parameter to obtain the second value.

For example, the second count value may be input into the hash check algorithm or the MAC check algorithm as a parameter to obtain the second value.

For example, the second count value T and a tag value of the second data may be input into the hash check algorithm HMAC (key, Tag|T+1) algorithm, to obtain the second value H (T).

It may be understood that, because the second value is obtained based on the second count value, and when the second data corresponding to the second value changes, the second value also changes accordingly, the second check value obtained based on the second value is different from the second value. Therefore, after the second value is obtained based on the second count value, the second count value may be input into the check function to obtain the second check value, and the second check value is compared with the second value to check whether the first value changes and whether the second data corresponding to the second value is abnormal.

It should be noted that, when there is a check relationship between the first count value and the first value, the first count value may be input into the check algorithm to obtain a first check value, and then a check result is obtained by comparing the first check value with the first value; and when there is a check relationship between the second count value and the second value, the second count value may be input into the check algorithm to obtain a second check value, and then a check result is obtained by comparing the first check value with the first value.

For example, there may be a hash check relationship between the first count value (the second count value) and the first value (the second value). In this case, the first count value (the second count value) may be input into the hash check algorithm to obtain the first check value (the second check value), and then the check result is determined by using the first check value (the second check value) and the first value (the second value).

For another example, there may be a MAC check relationship between the first count value (the second count value) and the first value (the second value). In this case, the first count value (the second count value) may be input into the MAC check algorithm to obtain the first check value (the second check value), and then the check result is determined by using the first check value (the second check value) and the first value (the second value).

S202: Determine, based on the first count value, the second count value, the first value, and the second value, whether the first data and the second data in an electronic device are abnormal.

Data abnormality includes data replacement, data tampering, or data loss.

In a possible implementation, whether the first data in the electronic device is abnormal may be determined based on the first count value and the first value.

In a possible implementation, the first count value may be first input into the check function as a parameter to obtain a first check value, and then it is determined, based on the first check value and the first count value, whether the first data is abnormal.

For example, the first count value may be input into the check function as a parameter to obtain the first check value. Then, when the first check value is the same as the first count value, it is determined that the first data is normal; or when the first check value is different from the first count value, it is determined that the first data is abnormal.

For example, there is a hash check relationship between the first count value and the first value, the first count value is T, and the first value is H (T). If the first check value H (T) obtained after the first count value is input into the hash check algorithm HMAC (key, Tag|T) is the same as the first value H (T), it may be determined that the first data in the electronic device is normal.

For another example, there is a hash check relationship between the first count value and the first value, the first count value is T+1, and the first value is H (T). If the first check value H (T+1) obtained after the first count value is input into the hash check algorithm HMAC (key, Tag|T+1) is different from the first value H (T), it may be determined that the first data in the electronic device is abnormal and may be replaced or tampered with.

In a possible implementation, whether the second data in the electronic device is abnormal may be determined based on the second count value and the second value.

In a possible implementation, the second count value may be input into the check function as a parameter to obtain a second check value. Whether the first data is abnormal is determined based on the second check value and the second count value.

For example, the second count value may be input into the check function as a parameter to obtain the second check value. Then, when the second check value is the same as the second count value, it is determined that the second data is normal; or when the first check value is different from the first count value, it is determined that the first data is abnormal.

For example, there is a hash check relationship between the second count value and the second value, the second count value is T, and the second value is H (T). If the second check value H (T) obtained after the second count value is input into the hash check algorithm HMAC (key, Tag|T) is the same as the second value H (T), it may be determined that the second data in the electronic device is normal.

For another example, there is a hash check relationship between the second count value and the second value, the second count value is T+1, and the second value is H (T). If the second check value H (T+1) obtained after the second count value is input into the hash check algorithm HMAC (key, Tag|T+1) is different from the second value H (T), it may be determined that the second data in the electronic device is abnormal and may be replaced or tampered with.

It can be learned that, according to the check method provided in this embodiment of this application, whether the first data in the electronic device is abnormal may be determined based on the first count value and the first value, and whether the second data in the electronic device is abnormal may be determined based on the second count value and the second value. In this way, regardless of whether the attacker replaces the first data in the first memory or the second data in the second memory, it is determined that the data is abnormal because a status value of the data does not match the value of the counter of the electronic fuse corresponding to the status value, so that an anti-rollback status cannot be passed. In this way, an attack fails. Therefore, the check method provided in this embodiment of this application can prevent the attacker from replacing new-version data in a flash of a device with old-version data in the device power-off attack scenario.

Optionally, the method may further include the following steps.

S203: When the first data is abnormal and the second data is normal, replace the data stored in the first memory with the data stored in the second memory.

For example, there is a hash check relationship between the first count value and the first value, the first count value is T+1, and the first value is H (T). There is a hash check relationship between the second count value and the second value, the second count value is T, and the second value is H (T). If the first check value H (T+1) obtained after the first count value is input into the hash check algorithm HMAC (key, Tag|T+1) is different from the first value H (T), it may be determined that the first data in the electronic device is abnormal and may be replaced or tampered with. If the second check value H (T) obtained after the second count value is input into the hash check algorithm HMAC (key, Tag|T) is the same as the second value H (T), it may be determined that the second data in the electronic device is normal. Then, the data stored in the first memory may be replaced with the data stored in the second memory, to prevent an attacker from performing an attack by using the abnormal data in the first memory.

It can be learned that, according to the check method provided in this embodiment of this application, when the first data is abnormal and the second data is normal, the abnormal data stored in the first memory may be replaced with the normal data stored in the second memory, so that it is ensured that after the data in the first memory is replaced with the abnormal data by the attacker, the abnormal data in the first memory is replaced with the normal data in time, to prevent the attacker from performing an attack by using the abnormal data in the first memory.

S204: When the first data is normal and the second data is abnormal, replace the data stored in the second memory with the data stored in the first memory.

For example, there is a hash check relationship between the first count value and the first value, the first count value is T+1, and the first value is H (T+1). There is a hash check relationship between the second count value and the second value, the second count value is T+1, and the second value is H (T). If the first check value H (T+1) obtained after the first count value is input into the hash check algorithm HMAC (key, Tag|T+1) is the same as the first value H (T+1), it may be determined that the first data in the electronic device is normal. If the second check value H (T+1) obtained after the second count value is input into the hash check algorithm HMAC (key, Tag|T+1) is different from the second value H (T), it may be determined that the second data in the electronic device is abnormal and may be replaced or tampered with. Then, the data stored in the second memory may be replaced with the data stored in the first memory, to prevent an attacker from performing an attack by using the abnormal data in the second memory.

It can be learned that, according to the check method provided in this embodiment of this application, when the first data is normal and the second data is abnormal, the abnormal data stored in the second memory may be replaced with the normal data stored in the first memory, so that it is ensured that after the data in the second memory is replaced with the abnormal data by the attacker, the abnormal data in the second memory is replaced with the normal data in time, to prevent the attacker from performing an attack by using the abnormal data in the second memory.

S205: Update the first count value.

In a possible implementation, the electronic device may update the first count value when updating the first data.

For example, the data in the first memory of the electronic device is data A of a version 1. The electronic device obtains an update push of data of a version 2 by using another device (for example, a server or another electronic device), to trigger data update. Then, before updating the first data from the data A of the version 1 to the data B of the version 2, the electronic device first updates the first count value, and then updates the first data and the data stored in the first memory of the electronic device, so that the data version of the electronic device is updated.

In a possible implementation, the electronic device may update the first count value before the data update is performed on the first data and when the first data and the second data are normal.

S206: Update the first value based on an updated first count value.

In a possible implementation, the updated first count value may be input into the check function as a parameter to obtain an updated first value.

For example, initially, the data in the first memory of the electronic device is the data A of the version 1, the first count value is T, and the first value is H (T). There is a hash check relationship between the first count value and the first value. After the first count value is updated from T to T+1, the electronic device may input the updated first count value into the hash check algorithm to obtain the updated first value H (T+1) =HMAC (key, Tag∥cnt+1), then update the first value from H (T) to H (T+1), and update the data stored in the first memory from the data A of the version 1 to the data B of the version 2.

S207: Update the second count value.

In a possible implementation, the second count value may be updated when the first count value is different from the second count value.

For example, initially, the first count value is T, and the second calculated value is T. After the first count value is updated from T to T+1, the first count value is T+1, and the second calculated value is T. If the first count value is different from the second count value, the second count value is also updated from T to T+1.

In a possible implementation, the second count value may be updated when the first count value is different from the second count value and the first data is different from the second data.

For example, initially, the first count value is T, the second calculated value is T, the data in the first memory of the electronic device is the data A of the version 1, and the data in the second memory of the electronic device is the data A of the version 1. After the first count value is updated from T to T+1 and the data stored in the first memory is updated from the data A of the version 1 to the data B of the version 2, because the first count value is different from the second count value and the first data (the data B of the version 2) is different from the second data (the data A of the version 1), the second count value is also updated from T to T+1.

It should be noted that, that the first count value is different from the second count value indicates that the data in the first memory is updated but the data in the second memory is not updated. In this case, the second counter may be updated to trigger the data in the second memory and the second count value to be updated, so that a version of the data stored in the first memory is the same as a version of the data stored in the second memory.

S208: Update the first value based on the updated first count value.

For example, initially, the data in the second memory of the electronic device is the data A of the version 1, the second count value is T, and the second value is H (T). There is a hash check relationship between the second count value and the second value. After the second count value is updated from T to T+1, the electronic device may input an updated second count value into the hash check algorithm to obtain an updated second value H (T+1) =HMAC (key, Tag∥cnt+1), update the second value from H (T) to H (T+1), and update the data stored in the second memory from the data A of the version 1 to the data B of the version 2.

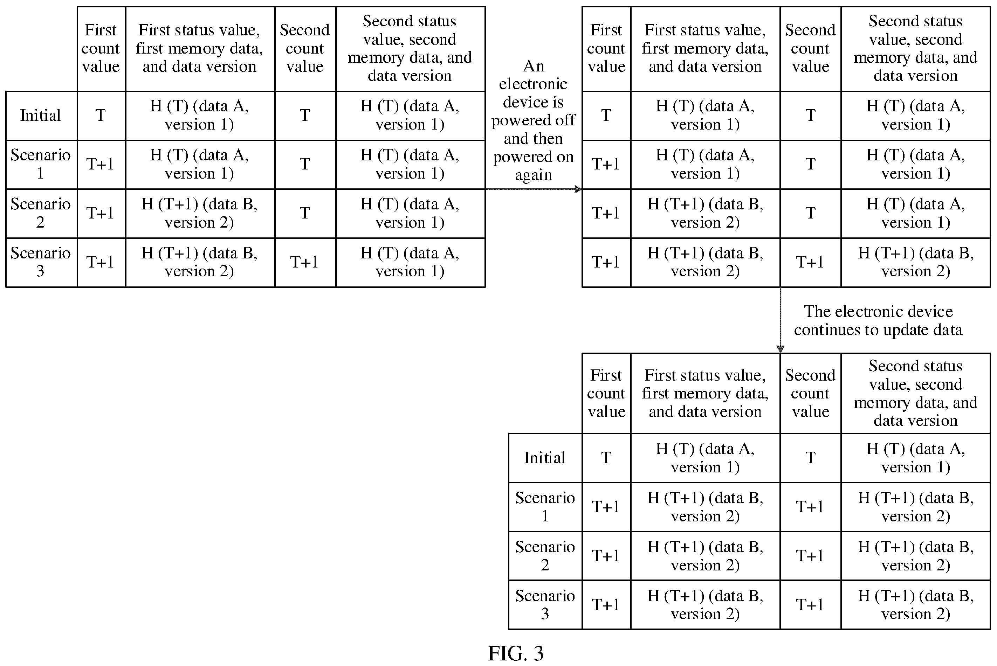

With reference to FIG. 3, the following describes how to prevent an attacker from attacking an electronic device in a check method provided in an embodiment of this application.

As shown in FIG. 3, a first count value is updated from T to T+1. In a normal case, the electronic device needs to input a first count value into the check algorithm to obtain an updated first value H (T+1), update the first value from H (T) to H (T+1), and update data stored in a first memory from data A of a version 1 to data B of a version 2; and then, update the first count value from T to T+1, update a second value from H (T) to H (T+1), and update data stored in a second memory from the data A of the version 1 to the data B of the version 2.

In a scenario 1, if an attacker powers off the electronic device and reads all the data (the data A of the version 1) in the first memory or the second memory when the first count value is updated from T to T+1, the first value is updated from H (T) to H (T+1), but the data stored in the first memory is not updated from the data A of the version 1 to the data B of the version 2, after the electronic device is powered on again, if the value H (T+1) obtained after the first count value is input into the hash check algorithm HMAC (key, Tag|T+1) is different from the first value H (T), it may be determined that first data in the electronic device is abnormal and may be replaced or tampered with; and if the value H (T) obtained after the second count value is input into the hash check algorithm HMAC (key, Tag|T) is the same as the second value H (T), it may be determined that second data in the electronic device is normal. Then, the data stored in the first memory may be replaced with the data stored in the second memory, to prevent an attacker from performing an attack by using the abnormal data in the first memory. Then, the electronic device calculates the H (T+1) =HMAC (key, Tag∥cnt+1), updates the first value from H (T) to H (T+1), and updates the data stored in the first memory from the data A of the version 1 to the data B of the version 2; and then, updates the second count value from T to T+1, updates the second value from H (T) to H (T+1), and updates the data stored in the second memory from the data A of the version 1 to the data B of the version 2.

In this case, regardless of whether the attacker replaces the data stored in the first memory or the data stored in the second memory with read data of the data A of the version 1, the electronic device detects that the data is abnormal because the value (the first value or the second value) corresponding to the data does not match the count value (the first count value or the second count value).

For example, as shown in Table 2, if the data of the data A of the version 1 has a vulnerability, the attacker replaces the data stored in the first memory with the read data of the version A to perform an attack. Because the first value that is used by the attacker and that corresponds to the read data of the data A of the version 1 is H (T), but the first count value is updated from T to T+1, the value H (T+1) obtained after the first count value is input into the hash check algorithm HMAC (key, Tag|T+1) is different from the first value H (T). In this case, it may be determined that the first data in the electronic device is abnormal and may be replaced or tampered with. If the value H (T+1) obtained after the second count value is input into the hash check algorithm HMAC (key, Tag|T+1) is the same as the second value H (T+1), it may be determined that the second data in the electronic device is normal. Then, the data stored in the first memory may be replaced with the data stored in the second memory, to prevent the attacker from performing the attack by using the vulnerability in the data of the data A of the version 1 in the first memory.

**Table 2**

| Procedure | First count value | First value, data in a first memory, and data version | Second count value | Second value, data in a second memory, and data version |
|---|---|---|---|---|
| Initial | T+1 | H (T+1) (data B, version 2) | T+1 | H (T+1) (data B, version 2) |
| The attacker replaces the data in the first memory | T+1 | H (T) (data A, version 1) | T+1 | H (T+1) (data B, version 2) |
| Detect and handle an abnormality | T+1 | H (T+1) (data B, version 2) | T+1 | H (T+1) (data B, version 2) |

In a scenario 2, if the attacker powers off the electronic device and reads all the data in the first memory or the second memory when the first count value is updated from T to T+1, the first value is updated from H (T) to H (T+1), the data stored in the first memory is updated from the data A of the version 1 to the data B of the version 2, but the second count value is not updated from T to T+1, after the electronic device is powered on again, if the value H (T+1) obtained after the first count value is input into the hash check algorithm HMAC (key, Tag|T+1) is the same as the first value H (T+1), it may be determined that first data in the electronic device is normal; and if the value H (T) obtained after the second count value is input into the hash check algorithm HMAC (key, Tag|T) is the same as the second value H (T), it may be determined that second data in the electronic device is normal. Then, because the first count value is different from the second count value, the second count value is updated from T to T+1, the second count value is updated from H (T) to H (T+1), and the data stored in the second memory is updated from the data A of the version 1 to the data B of the version 2.

In this case, regardless of whether the attacker replaces the data stored in the first memory or the data stored in the second memory with read data of the data A of the version 1, the electronic device detects that the data is abnormal because the value (the first value or the second value) corresponding to the data does not match the count value (the first count value or the second count value).

For example, as shown in Table 3, if the data of the data A of the version 1 has a vulnerability, the attacker replaces the data stored in the second memory with the read data of the version A to perform an attack. Because the first value that is used by the attacker and that corresponds to the read data of the data A of the version 1 is H (T), but the second count value is updated from T to T+1, the value H (T+1) obtained after the second count value is input into the hash check algorithm HMAC (key, Tag|T+1) is different from the second value H (T). In this case, it may be determined that the second data in the electronic device is abnormal and may be replaced or tampered with. If the value H (T+1) obtained after the first count value is input into the hash check algorithm HMAC (key, Tag|T+1) is the same as the first value H (T+1), it may be determined that the first data in the electronic device is normal. Then, the data stored in the second memory may be replaced with the data stored in the first memory, to prevent the attacker from performing the attack by using the vulnerability in the data A of the version 1 in the second memory.

**Table 3**

| Procedure | First count value | First value, data in a first memory, and data version | Second count value | Second value, data in a second memory, and data version |
|---|---|---|---|---|
| Initial | T+1 | H (T+1) (data B, version 2) | T+1 | H (T+1) (data B, version 2) |
| The attacker replaces the data in the first memory | T+1 | H (T+1) (data B, version 2) | T+1 | H (T) (data A, version 1) |
| Detect and handle an abnormality | T+1 | H (T+1) (data B, version 2) | T+1 | H (T+1) (data B, version 2) |

In the scenario 3, if the attacker powers off the electronic device and reads all the data in the first memory (the data B of the version 2) or the second memory (the data A of the version 1) when the first count value is updated from T to T+1, the first value is updated from H (T) to H (T+1), the data stored in the first memory is updated from the data A of the version 1 to the data B of the version 2, the second count value is updated from T to T+1, but the second value is not updated from H (T) to H (T+1) and the data stored in the second memory is not updated from the data A of the version 1 to the data B of the version 2, after the terminal is powered on again, if the value H (T+1) obtained after the first count value is input into the hash check algorithm HMAC (key, Tag|T+1) is the same as the first value H (T+1), it may be determined that first data in the electronic device is normal; and if the value H (T+1) obtained after the second count value is input into the hash check algorithm HMAC (key, Tag|T) is different from the second value H (T), it may be determined that second data in the electronic device is abnormal and may be replaced or tampered with. Then, the data stored in the second memory may be replaced with the data stored in the first memory, to prevent an attacker from performing an attack by using the abnormal data in the second memory.

In this case, regardless of whether the attacker replaces the data stored in the first memory or the data stored in the second memory with read data of the data A of the version 1, the electronic device detects that the data is abnormal because the value (the first value or the second value) corresponding to the data does not match the count value (the first count value or the second count value).

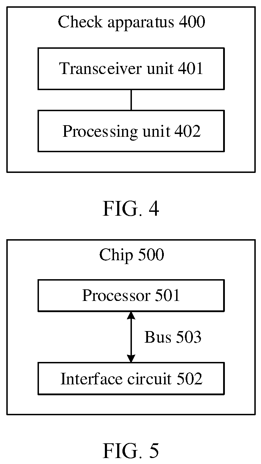

The following describes, with reference to FIG. 4, a check apparatus configured to perform the foregoing check method. The check apparatus is applied to an electronic device. The electronic device includes a first electronic fuse, a second electronic fuse, a first memory, and a second memory.

Specifically, the check apparatus may be the electronic device or a chip or a functional unit of the electronic device.

It may be understood that, to implement the foregoing function, the check apparatus includes a corresponding hardware and/or software module for performing the function. With reference to the example algorithm steps described in embodiments disclosed in this specification, embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of embodiments of this application.

In embodiments of this application, the check apparatus may be divided into functional modules based on the foregoing method examples. For example, functional modules may be obtained through division based on corresponding functions, or two or more functions may be integrated into one processing module. The integrated module may be implemented in a form of hardware or software. It should be noted that division into the modules in embodiments is an example, and is merely logical function division. In actual implementation, there may be another division manner.

When each function module is obtained through division based on each corresponding function, FIG. 4 is a possible diagram of compositions of the check apparatus in the foregoing embodiments. As shown in FIG. 4, the check apparatus 400 may include a transceiver unit 401 and a processing unit 402.

The transceiver unit 401 is configured to obtain a first count value, a second count value, a first value, and a second value.

The processing unit 402 is configured to determine, based on the first count value, the second count value, the first value, and the second value, whether the first data and the second data in the electronic device are abnormal.

The first count value is a value of a counter of the first electronic fuse, the second count value is a value of a counter of the second electronic fuse, the first value indicates a status of the first data, the first data is data stored in the first memory, the second value indicates a status of the second data, the second data is data stored in the second memory, there is a check relationship between the first count value and the first value, and there is a check relationship between the second count value and the second value.

In a possible implementation, the processing unit 402 is specifically configured to determine, based on the first count value and the first value, whether the first data in the electronic device is abnormal; and determine, based on the second count value and the second value, whether the second data in the electronic device is abnormal.

In a possible implementation, the processing unit 402 is further configured to: when the first data is abnormal and the second data is normal, replace the data stored in the first memory with the data stored in the second memory.

In a possible implementation, the processing unit 402 is further configured to: when the first data is normal and the second data is abnormal, replace the data stored in the second memory with the data stored in the first memory.

In a possible implementation, the processing unit 402 is further configured to: update the first count value; and update the first value based on an updated first count value.

In a possible implementation, the processing unit 402 is further configured to: update the second count value; and update the second value based on an updated second count value.

In a possible implementation, the processing unit 402 is specifically configured to: update the second count value when the first count value is different from the second count value.

An embodiment of this application further provides a chip. FIG. 5 is a diagram of a structure of a chip 500. The chip 500 includes one or more processors 501 and an interface circuit 502. Optionally, the chip 500 may further include a bus 503.

The foregoing modules or units may be implemented by using software, hardware, or a combination of software and hardware.

In embodiments of this application, "implemented by software" means that a processor reads and executes program instructions stored in a memory to implement a function corresponding to the foregoing module or unit. The processor is a processing circuit that has a function of executing the program instructions, and includes but is not limited to at least one of the following: various types of processing circuits that can execute the program instructions, for example, a central processing unit (central processing unit, CPU), a microprocessor, a digital signal processor (digital signal processor, DSP), a microcontroller (microcontroller unit, MCU), or an artificial intelligence processor. In some other embodiments, the processor may further include a circuit that has another processing function (for example, a hardware circuit, a bus, and an interface circuit that are used for hardware acceleration). The processor may be presented in a form of an integrated chip. For example, the processor may be presented in a form of an integrated chip whose processing function includes only a function of executing software instructions; or the processor may be presented in a form of a SoC (system-on-a-chip, system-on-a-chip). To be specific, on one chip, in addition to the processing circuit (which is usually referred to as a "core") that can execute the program instructions, another hardware circuit configured to implement a specific function is further included (where certainly, the hardware circuit may also be independently implemented based on an ASIC or an FPGA). Correspondingly, in addition to the function of executing software instructions, processing functions may further include various hardware acceleration functions (such as AI computing, encoding and decoding, and compression and decompression).

In embodiments of this application, "implemented by hardware" means that a function of the foregoing module or unit is implemented through a hardware processing circuit that does not have a function of processing program instructions. The hardware processing circuit may include a discrete hardware device, or may be an integrated circuit. To reduce power consumption and a size, an integrated circuit is usually used for implementation. The hardware processing circuit may include an ASIC (application-specific integrated circuit, application-specific integrated circuit) or a PLD (programmable logic device, programmable logic device). The PLD may further include an FPGA (field programmable gate array, field programmable gate array), a CPLD (complex programmable logic device, complex programmable logic device), and the like. These hardware processing circuits may be an independently packaged semiconductor chip (for example, packaged into an ASIC), or may be integrated with another circuit (for example, a CPU or a DSP) and then packaged into a semiconductor chip. For example, a plurality of hardware circuits and CPUs may be formed on one silicon base, and are independently packaged into a chip, where the chip is also referred to as a SoC; or a circuit configured to implement an FPGA function and a CPU may be formed on a silicon base, and are independently packaged into a chip, where the chip is also referred to as a SoPC (system-on-a-programmable-chip, system-on-a-programmable-chip).

It should be noted that, when this embodiment of this application is implemented by software, hardware, or a combination of software and hardware, this application may be implemented by different software and hardware, and is not limited to being implemented only by one type of software or hardware. For example, one of the modules or units may be implemented through the CPU, and another module or unit may be implemented through the DSP. Similarly, when hardware is used for implementation, one of the modules or units may be implemented through the ASIC, and another module or unit may be implemented through the FPGA. Certainly, it is also not specified that some or all modules or units are implemented by using a same type of software (for example, through the CPU) or a same type of hardware (for example, through the ASIC). In addition, a person skilled in the art may know that, software usually has better flexibility but poorer performance than hardware, and hardware is exactly opposite. Therefore, a person skilled in the art may select software, hardware, or a combination thereof for implementation based on an actual requirement.

The processor 501 may be an integrated circuit chip and has a signal processing capability. In an implementation process, the steps in the foregoing packet processing methods may be completed by using a hardware integrated logic circuit in the processor 501, or by using instructions in a form of software.

Optionally, the processor 501 may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, or a discrete hardware component. The processor 501 may implement or perform the methods and steps that are disclosed in embodiments of this application. The general-purpose processor may be a microprocessor, or the processor may be any conventional processor or the like.

The interface circuit 502 may be configured to send or receive data, instructions, or information. The processor 501 may process the data, the instructions, or other information received through the interface circuit 502, and may send processed information through the interface circuit 502.

Optionally, the chip further includes a memory. The memory may include a read-only memory and a random access memory, and provide operation instructions and data for the processor. A part of the memory may further include a non-volatile random access memory (non-volatile random access memory, NVRAM).

Optionally, the memory stores an executable software module or a data structure, and the processor may perform a corresponding operation by invoking operation instructions stored in the memory (the operation instructions may be stored in an operating system).

Optionally, the chip may be used in the check apparatus in embodiments of this application. Optionally, the interface circuit 502 may be configured to output an execution result of the processor 501. For the packet processing method provided in one or more embodiments of this embodiment of this application, refer to the foregoing embodiments. Details are not described herein again.

It should be noted that functions corresponding to each of the processor 501 and the interface circuit 502 may be implemented by using a hardware design, may be implemented by using a software design, or may be implemented by combining software and hardware. This is not limited herein.

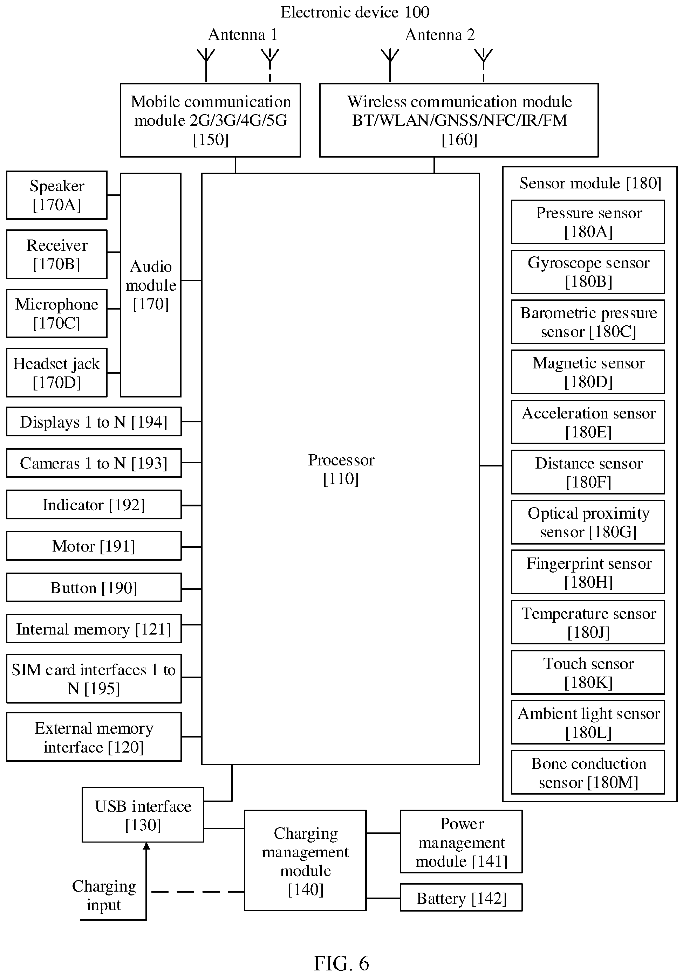

FIG. 6 is a diagram of a structure of an electronic device according to an embodiment of this application. The electronic device 100 may be a mobile phone, a tablet computer, a wearable device, a vehicle-mounted device, an augmented reality (augmented reality, AR)/a virtual reality (virtual reality, VR) device, a notebook computer, an ultra-mobile personal computer (ultra-mobile personal computer, UMPC), a netbook, a personal digital assistant (personal digital assistant, PDA), a check apparatus, or a chip or a functional module in a check apparatus.

For example, FIG. 6 is a diagram of a structure of an electronic device 100 according to an embodiment of this application. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus. The processor 110 may be coupled to the touch sensor 180K through the I2C interface, so that the processor 110 communicates with the touch sensor 180K through the I2C bus interface, to implement a touch function of the electronic device 100. The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

It can be understood that an interface connection relationship between the modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from a charger. The charger may be a wireless charger or a wired charger. The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like.

The electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the touch sensor, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. It should be understood that, in descriptions of embodiments of this application, an image in an RGB format is used as an example for description. An image format is not limited in embodiments of this application. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more video codecs. In this way, the electronic device 100 can play or record videos in a plurality of coding formats, for example, moving picture experts group (moving picture experts group, MPEG) 1, MPEG 2, MPEG 3, and MPEG 4.

The external memory interface 120 may be configured to connect to an external storage card, for example, a micro SD card, to extend a storage capability of the electronic device 100. The internal memory 121 may be configured to store computer-executable program code. The executable program code includes instructions. The processor 110 runs the instructions stored in the internal memory 121, to implement various function applications of the electronic device 100 and data processing. The internal memory 121 may include a program storage area and a data storage area.

The electronic device 100 may implement an audio function, for example, music playing and recording, by using the audio module 170, the speaker 170A, the receiver 170B, the microphone 170C, the headset jack 170D, the application processor, and the like.

The button 190 includes a power button, a volume button, and the like. The button 190 may be a mechanical button, or may be a touch button. The electronic device 100 may receive a key input, and generate a key signal input related to a user setting and function control of the electronic device 100. The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. The indicator 192 may be an indicator light, and may be configured to indicate a charging status and a power change, or may be configured to indicate a message, a missed call, a notification, and the like. The SIM card interface 195 is configured to connect to a SIM card.

It should be noted that the electronic device 100 may be a chip system or a device having a structure similar to that in FIG. 6. The chip system may include a chip, or may include a chip and another discrete device. For actions, terms, and the like in embodiments of this application, refer to each other. This is not limited. In embodiments of this application, a name of a message exchanged between devices, a name of a parameter in a message, or the like is merely an example. Another name may alternatively be used during specific implementation. This is not limited. In addition, the composition structure shown in FIG. 6 does not constitute a limitation on the electronic device 100. In addition to the components shown in FIG. 6, the electronic device 100 may include more or fewer components than those shown in FIG. 6, or some components may be combined, or different component arrangements may be used.

The processor and the transceiver described in this application may be implemented in an integrated circuit (integrated circuit, IC), an analog IC, a radio frequency integrated circuit, a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an n-type metal oxide semiconductor (n-type metal oxide semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

An embodiment of this application further provides a check apparatus. The apparatus includes at least one processor. When the at least one processor executes program code or instructions, the foregoing related method steps are implemented to implement the packet processing method in the foregoing embodiments.

Optionally, the apparatus may further include at least one memory, and the at least one memory is configured to store the program code or the instructions.

An embodiment of this application further provides an electronic device. The electronic device includes a first electronic fuse, a second electronic fuse, a first memory, a second memory, and any check apparatus provided in embodiments of this application.

An embodiment of this application further provides a computer storage medium. The computer storage medium stores computer instructions. When the computer instructions are run on a check apparatus, the check apparatus is enabled to perform the foregoing related method steps to implement the packet processing method in the foregoing embodiments.

An embodiment of this application further provides a computer program product. When the computer program product runs on a computer, the computer is enabled to perform the foregoing related steps, to implement the packet processing method in the foregoing embodiment.

An embodiment of this application further provides a check apparatus. The apparatus may be specifically a chip, an integrated circuit, a component, or a module. Specifically, the apparatus may include a connected processor and a memory configured to store instructions, or the apparatus includes at least one processor, configured to obtain instructions from an external memory. When the apparatus runs, the processor may execute instructions, so that the chip performs the packet processing method in the foregoing method embodiments.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A check method, applied to an electronic device, wherein the electronic device comprises a first electronic fuse, a second electronic fuse, a first memory, and a second memory, and the method comprises:
obtaining a first count value, a second count value, a first value, and a second value, wherein the first count value is a value of a counter of the first electronic fuse, the second count value is a value of a counter of the second electronic fuse, the first value indicates a status of first data, the first data is data stored in the first memory, the second value indicates a status of second data, the second data is data stored in the second memory, there is a check relationship between the first count value and the first value, and there is a check relationship between the second count value and the second value; and
determining, based on the first count value, the second count value, the first value, and the second value, whether the first data and the second data in the electronic device are abnormal.

2. The method according to claim 1, wherein the determining, based on the first count value, the second count value, the first value, and the second value, whether the first data and the second data in the electronic device are abnormal comprises:
determining, based on the first count value and the first value, whether the first data in the electronic device is abnormal; and
determining, based on the second count value and the second value, whether the second data in the electronic device is abnormal.

3. The method according to claim 2, wherein the determining, based on the first count value and the first value, whether the first data in the electronic device is abnormal comprises:
inputting the first count value into a check function as a parameter to obtain a first check value; and
determining, based on the first check value and the first count value, whether the first data is abnormal.

4. The method according to claim 2 or 3, wherein the determining, based on the second count value and the second value, whether the second data in the electronic device is abnormal comprises:
inputting the second count value into the check function as a parameter to obtain a second check value; and
determining, based on the second check value and the second count value, whether the first data is abnormal.

5. The method according to any one of claims 1 to 4, wherein the method further comprises:
when the first data is abnormal and the second data is normal, replacing the data stored in the first memory with the data stored in the second memory.

6. The method according to any one of claims 1 to 5, wherein the method further comprises:
when the first data is normal and the second data is abnormal, replacing the data stored in the second memory with the data stored in the first memory.

7. The method according to any one of claims 1 to 6, wherein the method further comprises:
updating the first count value; and
updating the first value based on an updated first count value.

8. The method according to claim 7, wherein the updating the first count value comprises:
updating the first count value when data update is performed on the first data.

9. The method according to claim 7 or 8, wherein the updating the first value based on an updated first count value comprises:
inputting the updated first count value into the check function as a parameter to obtain an updated first value.

10. The method according to any one of claims 1 to 9, wherein the method further comprises:
updating the second count value; and
updating the second value based on an updated second count value.

11. The method according to claim 10, wherein the updating the second count value comprises:
updating the second count value when the first count value is different from the second count value.

12. The method according to claim 10 or 11, wherein the updating the second value based on an updated second count value comprises:
inputting the updated second count value into the check function as a parameter to obtain an updated second value.

13. A check apparatus, used in an electronic device, wherein the electronic device comprises a first electronic fuse, a second electronic fuse, a first memory, and a second memory, and the apparatus comprises a transceiver unit and a processing unit, wherein
the transceiver unit is configured to obtain a first count value, a second count value, a first value, and a second value, wherein the first count value is a value of a counter of the first electronic fuse, the second count value is a value of a counter of the second electronic fuse, the first value indicates a status of first data, the first data is data stored in the first memory, the second value indicates a status of second data, the second data is data stored in the second memory, there is a check relationship between the first count value and the first value, and there is a check relationship between the second count value and the second value; and
the processing unit is configured to determine, based on the first count value, the second count value, the first value, and the second value, whether the first data and the second data in the electronic device are abnormal.

14. The apparatus according to claim 13, wherein the processing unit is specifically configured to:
determine, based on the first count value and the first value, whether the first data in the electronic device is abnormal; and
determine, based on the second count value and the second value, whether the second data in the electronic device is abnormal.

15. The apparatus according to claim 14, wherein the processing unit is specifically configured to:
input the first count value into a check function as a parameter to obtain a first check value; and
determine, based on the first check value and the first count value, whether the first data is abnormal.

16. The apparatus according to claim 14 or 15, wherein the processing unit is specifically configured to:
input the second count value into the check function as a parameter to obtain a second check value; and
determine, based on the second check value and the second count value, whether the first data is abnormal.

17. The apparatus according to any one of claims 13 to 16, wherein the processing unit is further configured to:
when the first data is abnormal and the second data is normal, replace the data stored in the first memory with the data stored in the second memory.

18. The apparatus according to any one of claims 13 to 17, wherein the processing unit is further configured to:
when the first data is normal and the second data is abnormal, replace the data stored in the second memory with the data stored in the first memory.

19. The apparatus according to any one of claims 13 to 18, wherein the processing unit is further configured to:
update the first count value; and
update the first value based on an updated first count value.

20. The apparatus according to claim 19, wherein the processing unit is specifically configured to:
update the first count value when data update is performed on the first data.

21. The apparatus according to claim 19 or 20, wherein the processing unit is specifically configured to:
input the updated first count value into the check function as a parameter to obtain an updated first value.

22. The apparatus according to any one of claims 13 to 21, wherein the unit is further configured to:
update the second count value; and
update the second value based on an updated second count value.

23. The apparatus according to claim 22, wherein the processing unit is specifically configured to:
update the second count value when the first count value is different from the second count value.

24. The apparatus according to claim 22 or 23, wherein the processing unit is specifically configured to:
input the updated second count value into the check function as a parameter to obtain an updated second value.

25. A check apparatus, comprising at least one processor and a memory, wherein the at least one processor executes a program or instructions stored in the memory, so that the check apparatus implements the method according to any one of claims 1 to 12.

26. An electronic device, wherein the electronic device comprises a first electronic fuse, a second electronic fuse, a first memory, a second memory, and the check apparatus according to claim 25.

27. A computer non-volatile readable storage medium, configured to store a computer program, wherein when the computer program is run on a computer or a processor, the computer or the processor is enabled to implement the method according to any one of claims 1 to 8.

28. A computer program product, wherein the computer program product comprises instructions, and when the instructions are run on a computer or a processor, the computer or the processor is enabled to implement the method according to any one of claims 1 to 8.
